# EUROPEAN PATENT APPLICATION

(11) **EP 4 215 428 A1**
(43) Date of publication of application: **26.07.2023**
(21) Application number: 22210118.0
(22) Date of filing: 29.11.2022
(51) Int. Cl.: B62D 13/04, F15B 15/24, B62D 7/14, B62D 13/06

(54) **DEVICE FOR ADJUSTING A MAXIMUM STEERING ANGLE**

(30) Priority: 21.01.2022 IT 202200001004
(71) Applicant: R.P.F. S.p.A., 20151 Milano (IT)
(72) Inventor: RADRIZZANI, Flavio, Uboldo (Varese) (IT)
(74) Representative: Rapisardi, Mariacristina

(57) **Abstract**

Steering axle for a trailer of a vehicle (1) comprising a beam (100) that is rigidly connected to the trailer comprising at each of the two ends hinges (101A, 101B) for the rigid but freely rotating connection of the hubs (200A, 200B) of a pair of wheels provided with steering arms (201A, 201B), at least one hydraulic unit (300) for activating the steering fixed to the beam (100) comprising a hydraulic cylinder (301) and a piston that is movable in a direction that is parallel to the longitudinal axis of the beam provided with two semiaxes (302A, 302B) protruding respectively from the two ends of the cylinder (301), each semiaxis being connected by means of one or more steering bars to a respective steering arm of a wheel hub, wherein to the opposite heads (303A, 303B) of the hydraulic cylinder (301) respective pads (500A, 500B) are fixed that are adjustable axially to modulate the entering stroke of each semiaxis into the hydraulic cylinder.

(Figure 1)

## Description

The present invention refers to a steering axle for a trailer of a vehicle comprising a device for adjusting the maximum steering angle.

It is known that the steering axles for the trailer of a vehicle can be fitted with rims and tyres of different dimensions and characteristics according to the specific use of the trailer.

As is known, such different rim and tyre combinations may require different limits to the maximum steering angle, both in terms of features of the tyres and possible physical interference of the various mechanical components at a high steering angle.

Further, it is known how any trailer manufacturer can provide different chassis widths in function of the trailer, of the suspension fitted and of the devices that equip the suspension; but this necessitates different maximum steering angles for the same tyres.

It is accordingly known that traditionally, mechanical limiters of the maximum steering angle are provided, typically consisting of stroke end stops interposed between the fixed element of the steering hinge placed at the end of the steering axis and the steering arm solidly constrained on the wheel hub constrained to the axis through the steering hinge, traditionally consisting of screws of a suitably adjustable length.

When the steering actuator applies steering to the wheel through a kinematic chain consisting of one or more bars constraining the actuator with the steering arm, the maximum steering angle is reached when engaging the steering arm with the respective stop placed on the steering hinge.

It is evident how in such a situation all the stresses generated by the steering actuator continue to be discharged onto the steering arm through the kinematic chain that remains constantly stressed, entailing the possible deformation and even the breakage of the steering arm, or the fatigue failure of some components of the kinematic chain activating steering.

The need is accordingly felt to improve the structure of the devices limiting the maximum steering angle of a steering axle for a trailer of a vehicle of known type.

The technical task addressed by the present invention is accordingly to realise a steering axle for a trailer of a vehicle that enables the decried technical drawbacks of the prior art to be eliminated.

Within the context of this technical task, an object of the invention is to realise a steering axle for a trailer of a vehicle that comprises a device for limiting the maximum steering angle that does not stress the steering arm of the wheel hub.

Another object of the invention is to realise a steering axle for a trailer of a vehicle that comprises a device for limiting the maximum steering angle that does not stress the kinematic chain actuating the steering downstream of the steering actuator.

Last but not least, the object of the invention is to realise a steering axle for a trailer of a vehicle that comprises a device for limiting the maximum steering angle that is adjustable.

Last but not least, the object of the invention is to realise a steering axle for a trailer of a vehicle that comprises a device for limiting the maximum steering angle that is simple, simple to adjust and easily adaptable to the different rim and tyre configurations of the trailer.

The technical task, together with these and other objects according to the present invention are achieved by realising a steering axle for a trailer of a vehicle comprising a beam rigidly connected to the trailer comprising at each of the two ends hinges for the rigid but freely rotating connection of the hubs of a pair of wheels provided with steering arms, at least one hydraulic unit for activating the steering fixed to the beam comprising a hydraulic cylinder and a piston that is movable in a direction that is parallel to the longitudinal axis of the beam provided with two semiaxes protruding respectively from the two ends of the cylinder, each semiaxis being connected by means of one or more steering bars to a respective steering arm of a wheel hub, wherein to the opposite end heads of the hydraulic cylinder respective pads are fixed that are adjustable axially to modulate the entering stroke of each semiaxis into the hydraulic cylinder.

In one preferred embodiment, the adjustable pads are configured to interfere with a respective flange that is fixed to the end of each semiaxis outside the cylinder.

In one embodiment, the adjustable pads comprise a fixed element that is rigidly connected to the head of the hydraulic cylinder, an adjustable element in the axial direction of the semiaxis and reciprocal connecting and adjusting means of the fixed element and the adjustable element.

In one embodiment, the reciprocal connecting and adjusting means of the fixed element and of the adjustable element comprise a threaded connection.

The invention advantageously provides an adjusting system that is easy to install and dismantle as it does not require operations that subsequent or additional to standard operations.

In addition, the adjusting system can be supplied ready assembled to the customer without thus requiring operations to be performed by the user for installation.

Other features of the present invention are further defined in the following claims.

Further characteristics and advantages of the invention will more fully emerge from the description of a first preferred but not exclusive embodiment of a steering axle for a trailer of a vehicle comprising a device for adjusting the maximum steering angle according to the invention, illustrated by way of non-limiting example in the accompanying drawings, in which:
figure 1 shows an assembly view of a steering axle according to the present invention in nil steering conditions (zero degrees);
figure 2 shows an assembly view of a steering axle according to the present invention under maximum steering conditions;
figure 3 shows a detail D of the engagement of the end flange of a semiaxis with the respective adjustable pad under maximum steering conditions;

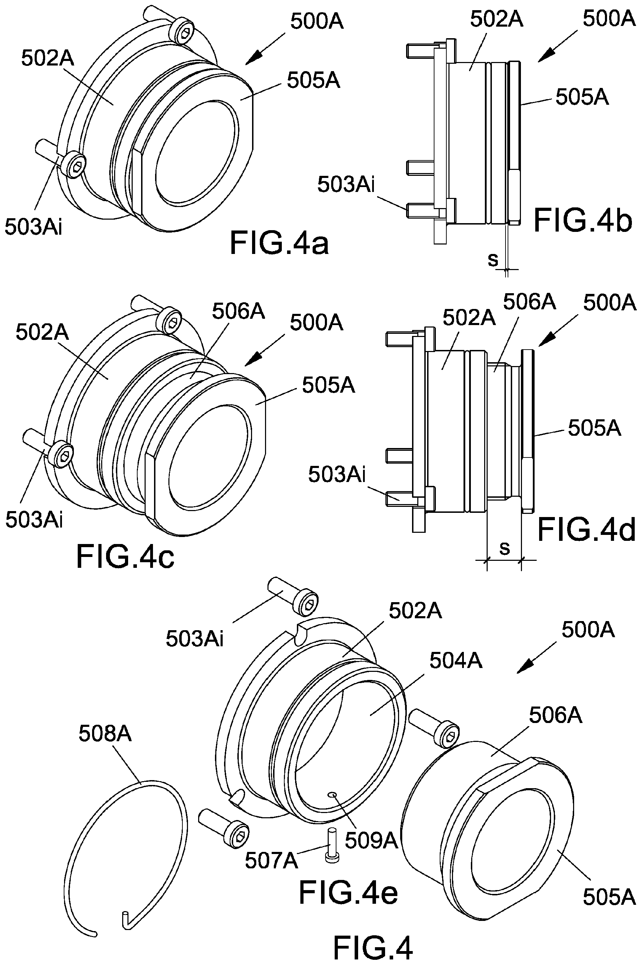

in figure 4, figures 4a, 4b, 4c, 4d, 4e show an adjustable pad respectively in a perspective view and in a side view under the conditions of minimum and maximum extension, and an exploded view of the components;
figures 5a and 5b show the steering actuator comprising the adjustable pads, respectively under conditions of minimum and maximum extension;
figure 6 shows an exploded view of the actuator, of a spacer flange and of the adjustable pad. The following detailed description refers to the appended drawings, which form a part thereof.

In the drawings, similar reference numbers typically identify similar components, unless the context indicates otherwise.

The embodiments described in the detailed description and in the drawings are not intended to be limiting.

There may be other embodiments, and other modifications can be made without departing from scope of the subject matter as defined in the appended claims.

The aspects of the present description, as generally described in the present context and illustrated in the figures, may be arranged, replaced, combined and designed in a wide range of different configurations, which are all contemplated explicitly and are part of this description. With reference to the cited figures, a steering axle is shown for a trailer of a vehicle according to the present invention indicated overall by the reference number 1.

The steering axle comprises a beam 100 that is rigidly connected to the trailer with known traditional means, typically bolts and/or welds, not shown in the figures.

The beam 100 comprises at each of the two opposite ends the hinges 101 A and 101 B for the rigid but freely rotating connection of the hubs 200 A and 200 B of a pair of wheels of the trailer. The hubs 200 A and 200 B are provided with steering arms 201 A and 201 B for activating the steering of the wheels of the trailer.

The steering axle 1 comprises at least one unit for actuating the steering, typically a hydraulic unit 300 fixed rigidly to the beam 100 typically in the middle plane at an advancement axis X of the trailer, with known means, typically bolts, and is fed by a hydraulic network on board, not shown in the figures.

The hydraulic unit 300 comprises a hydraulic cylinder 301 and a movable piston inside the cylinder, not shown for simplicity of the drawing.

The piston is movable in the direction parallel to the longitudinal axis Y of the beam 100 and is provided with two semiaxes 302 A and 302 B protruding respectively from the two opposite end heads 303 A and 303 B of the hydraulic cylinder 301.

Each semiaxis 302 A and 302 B is connected by means of a kinematic chain comprising one or more steering bars, respectively 310 Ai and 310 Bi, to the respective steering arm 201 A and 201B of the wheel hubs 200 A and 200B.

Advantageously and innovatively, according to the present invention, to the opposite end heads 303 A and 303 B of the hydraulic cylinder 301 respective adjustable pads 500 A and 500 B are fixed that are adjustable axially to modulate the entering stroke of each semiaxis 302 A and 302 B into the hydraulic cylinder 301.

Advantageously and innovatively, the adjustable pads 500 A and 500B are configured to interfere with a respective flange 510 A and 510B that is fixed to the respective ends 304 A and 304 B of each semiaxis 302 A and 302 B outside the hydraulic cylinder 301.

Advantageously, the adjustable pads 500 A and 500B are identical, and fitted specularly on the hydraulic cylinder 301, the action of which is specular relative to a median and advancement axis of the trailer: for the sake of simplicity reference is made below to just one half of the axle, specifically and with reference to the figures to the left half with index A, which will also apply to the corresponding symmetrical and specular right part, with index B.

The adjustable pad 500 A comprises at least one fixed element 502 A rigidly connected to the head 303 A of the hydraulic cylinder 301, typically with a plurality of removable screws 503 Ai engaging in respective lead screws 305 Ai realised in the head 303 A.

The adjustable pad 500 A comprises an adjustable element 505 A, which is adjustable in the relative reciprocal position with respect to the fixed element 502 A in the axial direction of the semiaxis 302 A, with reciprocal connecting and adjusting means, typically comprising at least one threaded connection.

Typically, but not in a limiting manner, the threaded connection comprises a thread 504 A inside the fixed element 502 A and a thread 506 A outside the adjustable element 505 A, engaging reciprocally.

One variant of the proposed construction consists of providing the element fixed rigidly to the cylinder with external threading and the adjustable element with internal threading.

The adjustment of the reciprocal engagement of the threads 504 A and 506 A defines the distance s between the fixed element 502 A and the outer end head of the adjustable element 505 A.

Advantageously, the connecting and adjusting means comprises locking means for locking the adjustment, typically comprising a locking screw 507 A, or an elastic element 508 A, which are engageable through the hole 509 A between the fixed element 502 A and the adjustable element 505 A.

Advantageously, in one embodiment a steering axle for a trailer of a vehicle according to the present invention has at least one or more connecting spacer flanges 520 A between the head 303 A of the hydraulic cylinder 301 and the fixed element 502 A of the adjustable pad 500A. Advantageously, the connecting spacer flanges 520 A are of a different height in the axial direction of the semiaxis 302 A.

The operation of a steering axle for a trailer of a vehicle according to the invention is clear from what is described and illustrated and, in particular, is substantially as follows.

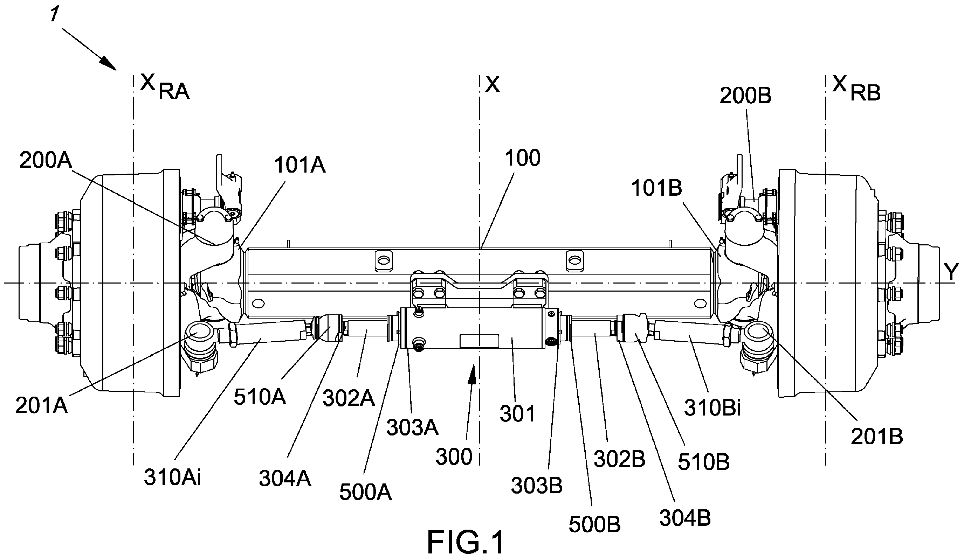

In the nil steering conditions shown in figure 1, the horizontal axes of the wheels XRA and XRB are parallel to the main advancement axis of the trailer X (thus zero degrees of a relative angle) and the steering system is symmetrical to the axis X.

The hydraulic actuation unit 300, because it is so commanded or because it is so suitably locked, has the piston in a central position in the hydraulic cylinder 301, and the semiaxes 302 A and 302 B protrude axially from the heads 303 A and 303 B equally, the bars of the kinematic chain 310 A and 310 B maintain the steering arms 201 A and 201 B symmetrically in position.

When a steering is actuated through the hydraulic unit 300, the piston in the hydraulic cylinder is activated in a required direction inside the hydraulic cylinder 300, and the semiaxes 302 A and 302 B that are reciprocally constrained on the piston follow the movement thereof, the one retracting the other progressively exiting the cylinder 301, dragging and/or pushing the bars of the kinematic chain 310 A and 310 B in actuating the steering angles of the wheel hubs 200 A and 200 B through the steering arms 201 A and 201 B, respectively pulled closed and pushed open upon opening of the steering angle.

The horizontal axes of the wheels XRA and XRB form two kinematically defined angles α A and α B relative to the main advancement axis of the trailer X.

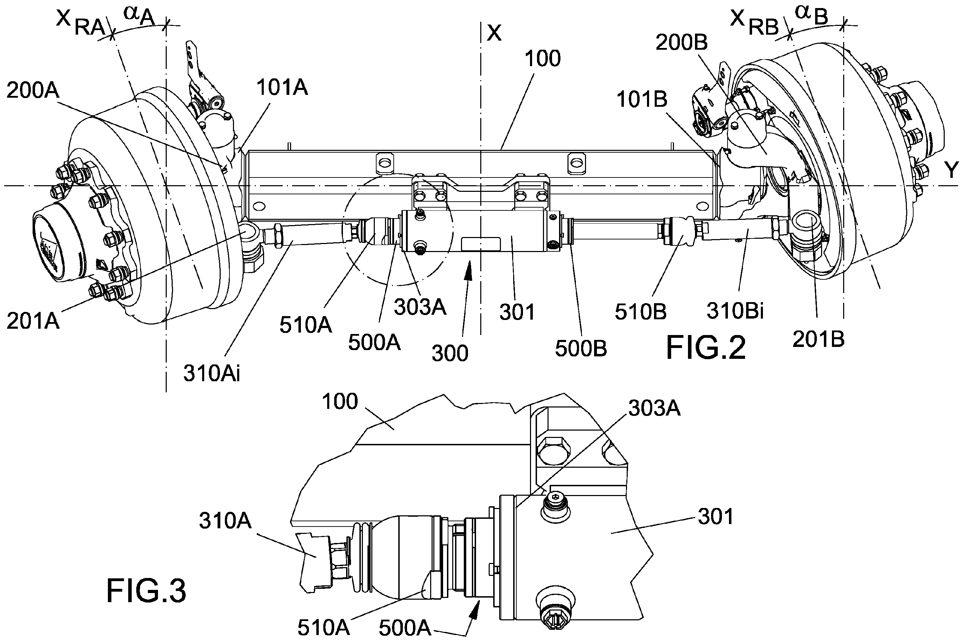

Figure 2 shows the steering conditions, specifically of maximum steering angle α A reached between the axis XRA and the axis X, during closure of the steering angle.

The semiaxis 302 A is completely retracted into the hydraulic cylinder 301, the flange 510 A fixed on the outer end 304 A of the semiaxis 302 A interferes abutting with the outer head of the adjustable element 505 A of the adjustable pad 500 A thus limiting the value of α A to the predefined value through adjusting the axial position of the adjustable element 505 A relative to the fixed element 502 A.

Advantageously, when the maximum steering angle as described above is reached, the stress generated by the hydraulic unit 300, even if maintained further, is cancelled on the semiaxis 302 A and on the external flange 304 A rigidly connected thereto, and is not transferred to the bars 310 Ai of the kinematic chain connected to the steering arm 201 A.

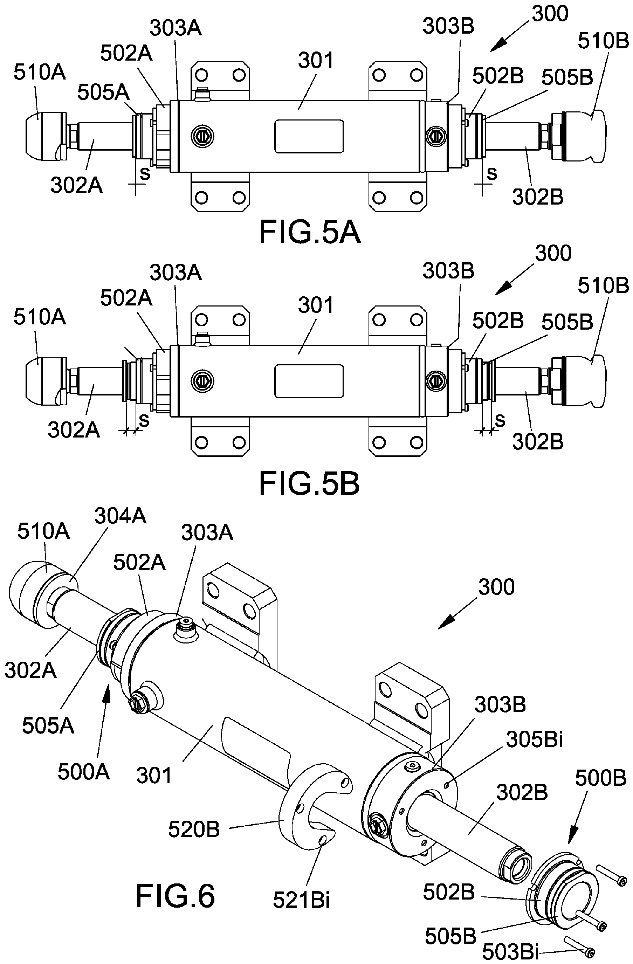

In one embodiment illustrated in figure 6, one or more connecting spacer flanges 520 A are inserted between the head 303 A of the hydraulic cylinder 301 and the fixed element 502 A of the adjustable pad 500 A and are suitably locked with the screws 503 Ai passing through the holes 521 Ai and engaging in the lead screws 305 Ai.

Inserting one or more spacer flanges 520 A further limits the return stroke of the semiaxis 302 A through the abutting engagement of the flange 510 A with the outer head of the adjustable element 505 A of the adjustable pad 500 A thus limiting further the value of α A to lower values in function of different characteristics and/or operating conditions of the trailer.

It has in practice been noted how a steering axle for a trailer of a vehicle according to the invention is particularly advantageous for realising a steering axle for a trailer of a vehicle comprising a device for limiting the maximum steering angle that does not stress the steering arm of the wheel hub.

Another advantage of the invention is to realise a steering axle for a trailer of a vehicle comprising a device for limiting the maximum steering angle that does not stress the kinematic chain actuating steering downstream of the steering actuator.

Last but not least, an advantage of the invention is to realise a steering axle for a trailer of a vehicle comprising a device for limiting the maximum steering angle that is simple, simple to adjust and easily adaptable to the different rim and tyre configurations of the trailer.

A steering axle for a trailer of a vehicle as conceived herein is susceptible to many modifications and variants, all falling within the scope of the inventive concept as defined by the claims; further, all the details are replaceable by technically equivalent elements.

In practice, the materials used, as well as the dimensions, can be any according to the needs and the state of the art.

## Claims

1. A steering axle for a trailer of a vehicle (1) comprising a beam (100) that is rigidly connectable to the trailer, comprising at each of the two opposite ends the hinges (101 A, 101 B) for the rigid but freely rotating connection of the hubs (200 A, 200 B) of a pair of wheels of the trailer provided with steering arms (201 A and 201 B), at least one hydraulic unit (300) for activating the steering fixed rigidly to said beam (100) comprising a hydraulic cylinder (301) and a piston inside said hydraulic cylinder (301) that is movable in a direction that is parallel to the longitudinal axis (Y) of said beam (100), the piston being provided with two semiaxes (302 A, 302 B) protruding respectively from the two opposite end heads (303 A, 303 B) of said cylinder (301), each said semiaxis (302 A, 302 B) being connected by means of a kinematic chain comprising one or more steering bars (310 Ai, 310 Bi) to a respective said steering arm (201 A, 201 B) of said wheel hubs (200 A, 200B), **characterised in that** to the opposite end heads (303 A, 303 B) of said hydraulic cylinder (301) respective pads (500 A, 500 B) are fixed that are adjustable axially to modulate the entering stroke of each said semiaxis (302 A, 302 B) into said hydraulic cylinder (301).

2. The steering axle for a trailer of a vehicle (1) according to claim 1, **characterised in that** said adjustable pads (500 A, 500 B) are configured to interfere with a respective flange (510 A, 510 B) that is fixed to the respective ends (304 A, 304 B) of each said semiaxis (302 A, 302 B) outside said hydraulic cylinder (301).

3. The steering axle for a trailer of a vehicle (1) according to the preceding claim, **characterised in that** said adjustable pads (500 A, 500 B) each comprise at least one fixed element (502 A, 502 B) rigidly connected to said heads (303 A, 303 B) of said hydraulic cylinder (301), at least one adjustable element (505 A, 505 B) in the axial direction of said semiaxes (302 A, 302 B) and reciprocal connecting and adjusting means for reciprocally connecting and adjusting said fixed elements (502 A, 502 B) and said adjustable elements (505 A, 505 B).

4. The steering axle for a trailer of a vehicle (1) according to the preceding claim, **characterised in that** said reciprocal connecting and adjusting means comprises at least one threaded connection.

5. The steering axle for a trailer of a vehicle (1) according to the preceding claim, **characterised in that** said reciprocal connecting and adjusting means comprises locking means for locking said adjustment.

6. The steering axle for a trailer of a vehicle (1) according to the preceding claim, **characterised in that** said locking means for locking said adjustment comprises a locking screw (507 A, 507 B) or an elastic element (508 A, 508 B) that are reciprocally engageable through a hole (509 A, 509 B) between said fixed element (502 A, 502 B) and said adjustable element (505 A, 505 B).

7. The steering axle for a trailer of a vehicle (1) according to one or more of the preceding claims, **characterised in that** between said head (303 A, 303 B) of said hydraulic cylinder (301) and said fixed element (502 A, 502 B) of said adjustable pad (500 A, 500 B) it has at least one or more connecting spacer flanges (520 A, 520 B).

8. The steering axle for a trailer of a vehicle (1) according to the preceding claim, **characterised in that** said connecting spacer flanges (520 A, 520 B) are of a different axial height.
